# EUROPEAN PATENT APPLICATION

(11) **EP 4 524 169 A1**
(43) Date of publication of application: **19.03.2025**
(21) Application number: 23903783.1
(22) Date of filing: 16.11.2023
(51) Int. Cl.: C08F 212/08, C08F 220/18, C08F 220/32, C09J 151/06, C09J 11/08

(54) **ADHESION-IMPARTING RESIN AND METHOD FOR PREPARING SAME**

(30) Priority: 16.12.2022 KR 20220177395
(71) Applicant: Kolon Industries, Inc., Seoul 07793 (KR)
(72) Inventor: KIM, Myung Jong, Seoul 07793 (KR); LEE, Wan Jae, Seoul 07793 (KR); PARK, Seung Soo, Seoul 07793 (KR)
(74) Representative: Vossius & Partner Patentanwälte Rechtsanwälte mbB
(86) International application number: PCT/KR2023/018459
(87) International publication number: WO 2024/128580

(57) **Abstract**

The present disclosure relates to an adhesion-imparting resin and a method of preparing the same, the adhesion-imparting resin including: a repeating unit (a) derived from a petroleum resin-based monomer; a repeating unit (b) derived from a (meth)acrylic monomer; and a repeating unit (c) derived from α-methylstyrene as a unit for adjusting molecular weight, and having a weight average molecular weight of 2,000 g/mol or less. The adhesion-imparting resin has excellent compatibility with a base polymer, and thus, transparency and adhesive strength of an adhesive including the adhesion-imparting resin may be improved.

## Description

### Technical Field

The present disclosure relates to an adhesion-imparting resin and a method of preparing the same.

### Background Art

Adhesives are used as materials for securing members in various fields including automobiles, electronic and electrical products, and construction materials.

For example, on an automobile manufacturing site, adhesives are used to secure automobile interior members to the interior of an automobile. In addition, on a manufacturing site for electronic devices such as mobile phones and liquid crystal displays, adhesives are used to secure cushioning materials or the like installed inside an electronic product for the purpose of protecting the electronic product from impacts, to secure exterior members of an electronic product, and to secure members constituting image display devices such as liquid crystal display devices, organic electroluminescent (EL) display devices, and plasma display panels .

For the adhesives, there has been a transition from solvent-based adhesives to water-based adhesives in the interest of reducing environmental impact, and in recent years, there has been a preference for using water-based acryl-based adhesives that have an acryl-based polymer or the like dispersed in an aqueous medium.

The acryl-based adhesive is often used in a mixture with an adhesion-imparting resin, to further improve adhesive properties such as adhesive strength and constant weight holding power.

However, when used with such adhesion-imparting resin, compatibility with an acryl-based polymer included in an acryl adhesive may deteriorate, which may make the adhesive opaque, such that a photocuring reaction may not be easily performed and heat resistance may also deteriorate.

Accordingly, the need for an adhesion-imparting resin having excellent compatibility with an acryl-based polymer has been increasing.

### Disclosure

### Technical Problem

To address the aforementioned problem, the present disclosure provides an adhesion-imparting resin having excellent compatibility with an acryl-based polymer and a method of preparing the adhesion-imparting resin.

### Technical Solution

One aspect of the present disclosure relates to an adhesion-imparting resin including: a repeating unit (a) derived from a petroleum resin-based monomer; a repeating unit (b) derived from a (meth)acrylic monomer; and a repeating unit (c) derived from an α-methylstyrene as a unit for adjusting molecular weight, and having a weight average molecular weight of 2,000 g/mol or less.

### Advantageous Effects

The adhesion-imparting resin according to the present disclosure may have improved compatibility with an acrylic polymer.

In addition, the adhesion-imparting resin according to the present disclosure may have excellent compatibility with an acryl-based polymer, and thus, an acryl-based adhesive including the adhesion-imparting resin may have improved transparency and heat resistance.

### Best Mode

### Mode for Invention

Hereinafter, more aspects and various embodiments of the present disclosure will be described in more detail.

The terms or words used herein should not be limited to usual or dictionary meanings, and should be interpreted as meanings and concepts corresponding to the technical idea of the present disclosure, based on the principle that the inventor can appropriately define the concepts of terms to explain the disclosure in the best manner.

The terminology used herein is used for the purpose of describing particular embodiments only and is not intended to limit the present disclosure. As used herein, the singular forms are intended to include the plural forms as well, unless the context clearly indicates otherwise. In the present disclosure, it should be understood that terms such as "include" or "have" are intended to specify the presence of a feature, number, step, operation, component, part or combination thereof described in the specification, but do not exclude in advance the possibility of the presence or addition of one or more other features, numbers, steps, operations, components, parts or combinations thereof.

Specifically, one aspect of the present disclosure relates to an adhesion-imparting resin including: a repeating unit (a) derived from a petroleum resin-based monomer; a repeating unit (b) derived from a (meth)acrylic monomer; and a repeating unit (c) derived from α-methylstyrene as a unit for adjusting molecular weight, and having a weight average molecular weight of 2,000 g/mol or less.

For example, the adhesion-imparting resin may have a reduced weight average molecular weight by including a repeating unit (c) derived from α-methylstyrene. Accordingly, the adhesion-imparting resin of the present disclosure may satisfy the above range of the weight average molecular weight, and thus, the compatibility and reactivity with the acryl-based polymer described below may be improved. Accordingly, the transparency and heat resistance of an adhesive including the adhesion-imparting resin may be further improved.

According to an embodiment, the petroleum resin-based monomer may include a commercially applicable liquid C5-C20 fraction, a diolefin, or a dicyclopentadiene.

According to another embodiment, the petroleum resin-based monomer may include a C5 fraction, a C9 fraction, a diolefin, or a dicyclopentadiene.

For example, the C5 fraction may include 1-pentene, 2-methyl-2-butene n-pentane, propadiene, cyclopentadiene, piperylene, isoprene, cyclopentene, and the like.

For example, the C9 fraction may include a styrene-based monomer, dicyclopentadiene, indene, trans-β-methyl styrene, methylindene, vinyltoluene, or benzene/toluene/xylene (BTX), and the like.

For example, the diolefin may include propadiene, dicyclopentadiene, cyclopentene, and the like.

According to an embodiment, the petroleum resin-based monomer may include a C9 fraction.

According to an embodiment, the C9 fraction may include a styrene-based monomer.

For example, the styrene-based monomer may be represented by Formula 1: 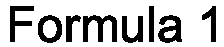 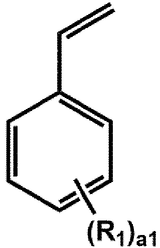 wherein, in Formula 1,
a1 is an integer from 0 to 5, and
R₁ is: hydrogen, deuterium, -F, -Cl, -Br, -I, a hydroxyl group, a cyano group, or a nitro group;
a C₁-C₂₀ alkyl group or a C₁-C₂₀ alkoxy group, each unsubstituted or substituted with deuterium, -F, -Cl, -Br, -I, a hydroxyl group, a cyano group, a C₆-C₂₀ aryl group, or any combination thereof; or
a C₆-C₂₀ aryl group that is unsubstituted or substituted with deuterium, -F, -Cl, -Br, -I, a hydroxyl group, a cyano group, a C₁-C₂₀ alkyl group, a C₁-C₂₀ alkoxy group, or any combination thereof.

According to an embodiment, R₁ and R₂ are each independently: hydrogen, deuterium, -F, -Cl, -Br, -I, a hydroxyl group, a cyano group, or a nitro group;
a methyl group, an ethyl group, an n-propyl group, an isopropyl group, an n-butyl group, a sec-butyl group, an isobutyl group, a tert-butyl group, an n-pentyl group, a tert-pentyl group, a neopentyl group, an isopentyl group, a sec-pentyl group, a 3-pentyl group, a sec-isopentyl group, an n-hexyl group, an isohexyl group, a sec-hexyl group, a tert-hexyl group, an n-heptyl group, an isoheptyl group, a sec-heptyl group, a tert-heptyl group, an n-octyl group, an isooctyl group, a sec-octyl group, a tert-octyl group, an n-nonyl group, an isononyl group, a sec-nonyl group, a tert-nonyl group, an n-decyl group, an isodecyl group, a sec-decyl group, a tert-decyl group, a methoxy group, an ethoxy group, an n-propoxy group, an isopropoxy group, an n-butoxy group, a sec-butoxy group, an isobutoxy group, a tert-butoxy group, an n-pentoxy group, a tert-pentoxy group, a neopentoxy group, an isopentoxy group, a sec-pentoxy group, a 3-pentoxy group, a sec-isopentoxy group, an n-hexoxy group, an isohexoxy group, a sec-hexoxy group, a tert-hexoxy group, an n-heptoxy group, an isoheptoxy group, a sec-heptoxy group, a tert-heptoxy group, an n-octoxy group, an isooctoxy group, a sec-octoxy group, a tert-octoxy group, an n-nonoxy group, an isononoxy group, a sec-nonoxy group, a tert-nonoxy group, an n-desoxy group, an isodesoxy group, a sec-desoxy group, or a tert-desoxy group, each unsubstituted or substituted with deuterium, -F, -Cl, -Br,-I, a hydroxyl group, a cyano group, a C₆-C₂₀ aryl group, or any combination thereof; or
a phenyl group, a naphthyl group, anthracenyl group, a phenanthrenyl group, or a pyrenyl group, each unsubstituted or substituted with deuterium, -F, -Cl, -Br, -I, a hydroxyl group, a cyano group, a C₁-C₂₀ alkyl group, a C₆-C₂₀ aryl group, or any combination thereof.

According to an embodiment, R₁ and R₂ may each independently be hydrogen, a methyl group, an ethyl group, an n-propyl group, an isopropyl group, an n-butyl group, a sec-butyl group, an isobutyl group, a tert-butyl group, an n-pentyl group, a tert-pentyl group, a neopentyl group, an isopentyl group, a sec-pentyl group, a 3-pentyl group, a sec-isopentyl group, an n-hexyl group, an isohexyl group, a sec-hexyl group, or a tert-hexyl group.
a1 may be an integer from 0 to 5.

According to an embodiment, the styrene-based monomer may include styrene.

According to an embodiment, the (meth)acrylic monomer may be represented by Formula 2: 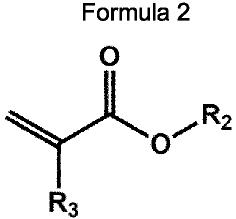 wherein, in Formula 2,
R₂ and R₃ are each independently: hydrogen, deuterium, -F, -Cl, -Br, -I, a hydroxyl group, a cyano group, or a nitro group;
a C₁-C₂₀ alkyl group or a C₁-C₂₀ alkoxy group, each unsubstituted or substituted with deuterium, -F, -Cl, -Br, -I, a hydroxyl group, a cyano group, a C₆-C₂₀ aryl group, or any combination thereof; or
a C₆-C₂₀ aryl group that is unsubstituted or substituted with deuterium, -F, -Cl, -Br, -I, a hydroxyl group, a cyano group, a C₁-C₂₀ alkyl group, a C₁-C₂₀ alkoxy group, or any combination thereof.

According to an embodiment, R₃ and R₄ are each independently: hydrogen, deuterium, -F, -Cl, -Br, -I, a hydroxyl group, a cyano group, or a nitro group;
a methyl group, an ethyl group, an n-propyl group, an isopropyl group, an n-butyl group, a sec-butyl group, an isobutyl group, a tert-butyl group, an n-pentyl group, a tert-pentyl group, a neopentyl group, an isopentyl group, a sec-pentyl group, a 3-pentyl group, a sec-isopentyl group, an n-hexyl group, an isohexyl group, a sec-hexyl group, a tert-hexyl group, an n-heptyl group, an isoheptyl group, a sec-heptyl group, a tert-heptyl group, an n-octyl group, an isooctyl group, a sec-octyl group, a tert-octyl group, an n-nonyl group, an isononyl group, a sec-nonyl group, a tert-nonyl group, an n-decyl group, an isodecyl group, a sec-decyl group, a tert-decyl group, a methoxy group, an ethoxy group, an n-propoxy group, an isopropoxy group, an n-butoxy group, a sec-butoxy group, an isobutoxy group, a tert-butoxy group, an n-pentoxy group, a tert-pentoxy group, a neopentoxy group, an isopentoxy group, a sec-pentoxy group, a 3-pentoxy group, a sec-isopentoxy group, an n-hexoxy group, an isohexoxy group, a sec-hexoxy group, a tert-hexoxy group, an n-heptoxy group, an isoheptoxy group, a sec-heptoxy group, a tert-heptoxy group, an n-octoxy group, an isooctoxy group, a sec-octoxy group, a tert-octoxy group, an n-nonoxy group, an isononoxy group, a sec-nonoxy group, a tert-nonoxy group, an n-desoxy group, an isodesoxy group, a sec-desoxy group, or a tert-desoxy group, each unsubstituted or substituted with deuterium, -F, -Cl, -Br,-I, a hydroxyl group, a cyano group, a C₆-C₂₀ aryl group, or any combination thereof; or
a phenyl group, a naphthyl group, anthracenyl group, a phenanthrenyl group, or a pyrenyl group, each unsubstituted or substituted with deuterium, -F, -Cl, -Br, -I, a hydroxyl group, a cyano group, a C₁-C₂₀ alkyl group, a C₆-C₂₀ aryl group, or any combination thereof.

According to an embodiment, R₃ may be hydrogen, a methyl group, an ethyl group, an n-propyl group, an isopropyl group, an n-butyl group, a sec-butyl group, an isobutyl group, or a tert-butyl group.

According to another embodiment, R₃ may be hydrogen or a methyl group.

According to an embodiment, R₄ may be a methyl group, an ethyl group, an n-propyl group, an isopropyl group, an n-butyl group, a sec-butyl group, an isobutyl group, a tert-butyl group, an n-pentyl group, a tert-pentyl group, a neopentyl group, an isopentyl group, a sec-pentyl group, a 3-pentyl group, a sec-isopentyl group, an n-hexyl group, an isohexyl group, a sec-hexyl group, or a tert-hexyl group.

According to another embodiment, R₄ may be a methyl group or an ethyl group.

According to an embodiment, the (meth)acrylic monomer may include a methyl acrylate, an ethyl acrylate, a propyl acrylate, a butyl acrylate, a methyl metacrylate, an ethyl metacrylate, a propyl metacrylate, a butyl acrylate, or any combination thereof.

According to an embodiment, the adhesion-imparting resin may include, as a unit for adjusting molecular weight, a repeating unit (c) derived from α-methylstyrene.

According to an embodiment, the content of a repeating unit (a) derived from a petroleum resin-based monomer may be less than or equal to the content of the repeating unit (c) derived from α-methylstyrene as a unit for adjusting molecular weight.

For example, when the content of the repeating unit (c) derived from α-methylstyrene as a unit for adjusting molecular weight is less than the content of the repeating unit (a) derived from a petroleum resin-based monomer, the weight average molecular weight of the adhesion-imparting resin may be more easily adjusted to 2,000 g/mol or less.

According to an embodiment, a ratio of the content of a repeating unit (c) derived from α-methylstyrene as a unit for adjusting molecular weight to the content of a repeating unit (a) derived from a petroleum resin-based monomer may be 0.1 to 10.

For example, a ratio of the content of a repeating unit (c) derived from α-methylstyrene as a unit for adjusting molecular weight to the content of a repeating unit (a) derived from a petroleum resin-based monomer may be 0.1 to 8, 0.1 to 6, 0.1 to 5, 0.1 to 4, 0.2 to 8, 0.2 to 6, 0.2 to 5, 0.2 to 4, 0.25 to 8, 0.25 to 6, 0.25 to 5, 0.25 to 4, 0.5 to 8, 0.5 to 6, 0.5 to 5, 0.5 to 4, more than 1 and 2.5 or less, more than 1 and 2 or less, more than 1 and 1.8 or less, more than 1 and 1.6 or less, 1.2 to 3, 1.2 to 2.5, 1.2 to 2, 1.4 to 2, 1.2 to 1.8, or 1.4 to 1.6.

According to an embodiment, the content of the repeating unit (a) derived from a petroleum resin-based monomer may be 5 to 40 wt% based on the total weight of the adhesion-imparting resin, the content of the repeating unit (b) derived from a (meth)acrylic monomer may be 5 to 80 wt% based on the total weight of the adhesion-imparting resin, and the content of the repeating unit (c) derived from α-methylstyrene may be 10 to 60 wt% based on the total weight of the adhesion-imparting resin.

For example, the content of repeating unit (a) derived from petroleum resin-based monomer may be 10 to 40 wt%, 10 to 38 wt%, 10 to 30 wt%, or 15 to 30 wt%, based on the total weight of the adhesion-imparting resin.

For example, the content of the repeating unit (b) derived from (meth)acrylic monomer may be 5 to 80 wt%, 15 to 80 wt%, 20 to 80 wt%, or 30 to 70 wt%, based on the total weight of the adhesion-imparting resin.

For example, the content of the repeating unit (c) derived from α-methylstyrene may be 15 to 60 wt%, 10 to 55 wt%, 10 to 50 wt%, 10 to 45 wt%, 10 to 40 wt%, or 15 to 40 wt%, based on the total weight of the adhesion-imparting resin.

According to an embodiment, a weight average molecular weight (Mw) of the adhesion-imparting resin may be 2,000 g/mol or less.

For example, the weight average molecular weight (Mw) of the adhesion-imparting resin may be 1,900 g/mol or less, 1,800 g/mol or less, or 1,500 g/mol or less.

According to an embodiment, the weight average molecular weight (Mw) of the adhesion-imparting resin may be 600 to 2,000 g/mol, 700 to 2,000 g/mol, 850 to 2,000 g/mol, 950 to 2,000 g/mol, 600 to 1,500 g/mol, 700 to 1,500 g/mol, 850 to 1,500 g/mol, 950 to 1,500 g/mol, 600 to 1,450 g/mol, 700 to 1,450 g/mol, 850 to 1,450 g/mol, or 950 to 1,450 g/mol.

According to an embodiment, a number average molecular weight (Mn) of the adhesion-imparting resin may be 1,000 g/mol or less.

For example, the number average molecular weight (Mn) of the adhesion-imparting resin may be 850 g/mol or less, 800 g/mol or less, 200 to 1,000 g/mol, 400 to 1,000 g/mol, 600 to 1,000 g/mol, 200 to 850 g/mol, 400 to 850 g/mol, 600 to 850 g/mol, 200 to 800 g/mol, 400 to 800 g/mol, 600 to 800 g/mol, or 720 to 800 g/mol.

According to an embodiment, a Z-average molecular weight (Mz) of the adhesion-imparting resin may be 7,000 g/mol or less.

For example, the Z-average molecular weight of the adhesion-imparting resin may be 100 to 7,000 g/mol, 100 to 6,900 g/mol, 500 to 7,000 g/mol, 1,000 to 7,000 g/mol, 1,190 to 7,000 g/mol, or 1,230 to 7,000 g/mol.

According to an embodiment, a polymer dispersity index (PDI) of the adhesion-imparting resin may be 1 to 3. For example, the polymer dispersity index (PDI) of the adhesion-imparting resin may be 1.1 to 3, 1.2 to 3, 1.3 to 3, 1 to 2, 1.2 to 2, 1.3 to 2, 1 to 1.9, 1.2 to 1.9, 1.3 to 1.9, or 1.31 to 1.9.

For example, when the average molecular weight value and the PDI of the adhesion-imparting resin satisfy the above ranges, the adhesion-imparting resin may have further improved compatibility with an acryl-based polymer.

According to an embodiment, a softening point of the adhesion-imparting resin may be from 40 to 120 °C. For example, the softening point of the adhesion-imparting resin may be 45 to 120 °C, 45 to 110 °C, 45 to 100 °C, 45 to 80 °C, 50 to 120 °C, 50 to 110 °C, 50 to 100 °C, 50 to 80 °C, 60 to 120 °C, 60 to 110 °C, 60 to 100 °C, or 60 to 80 °C.

According to an embodiment, a viscosity at 160 °C of the adhesion-imparting resin may be 20 cps to 200 cps. For example, the viscosity at 160 °C of the adhesion-imparting resin may be 20 cps to 150 cps, 20 cps to 100 cps, 20 cps to 80 cps, 20 cps to 78 cps, 30 cps to 150 cps, 30 cps to 100 cps, 30 cps to 80 cps, 30 cps to 78 cps, 35 cps to 150 cps, 35 cps to 100 cps, 35 cps to 80 cps, or 35 cps to 78 cps.

According to an embodiment, the viscosity at 180 °C of the adhesion-imparting resin may be 1 cps to 100 cps. For example, the viscosity at 180 °C of the adhesion-imparting resin may be 1 cps to 80 cps, 1 cps to 60 cps, 1 cps to 40 cps, 1 cps to 34 cps, 1 cps to 32 cps, 10 cps to 80 cps, 10 cps to 60 cps, 10 cps to 40 cps, 10 cps to 34 cps, or 10 cps to 32 cps.

According to an embodiment, the mol % of the repeating unit (b) derived from a (meth)acrylic monomer as measured via ¹H-NMR may be 1 to 80 mol %, 1 to 76 mol %, 1 to 75 mol %, 5 to 80 mol %, 10 to 80 mol %, 20 to 80 mol %, 21 to 80 mol %, 20 to 76 mol %, 20 to 75 mol %, 21 to 76 mol %, or 21 to 75 mol %, based on the total number of moles of repeating units derived from the monomer included in the adhesion-imparting resin.

For example, the mol % of the repeating unit (b) derived from a (meth)acrylic monomer may be confirmed through analysis of peaks obtained by ¹H-NMR measurement. When calculating the mol % of the repeating unit (b) derived from a (meth)acrylic monomer, an integral value of an aromatic detection range of 8 to 6 ppm was normalized to 5, and then, a peak value of the range of 4 to 3.3 ppm was integrated to calculate a -OCH₃ integral value.

Thereafter, the -OCH₃ integral value was calculated as a ratio to a peak integral value over the entire range of 9 to 0 ppm to calculate the mol % of the repeating unit (b) derived from a (meth)acrylic monomer.

According to an embodiment, an aromaticity of the adhesion-imparting resin as measured via NMR may be 20 to 99 mol%.

For example, the aromaticity of the adhesion-imparting resin as measured via NMR may be 20 to 97 mol %, 20 to 95 mol %, 20 to 90 mol %, or 20 to 89 mol %.

For example, the aromaticity of the adhesion-imparting resin may be calculated from the value obtained by subtracting the mol% of the repeating unit (b) derived from a (meth)acrylic monomer from 100 mol%.

Another aspect of the present disclosure provides a method of preparing an adhesion-imparting resin from a monomer composition including a petroleum resin-based monomer, a (meth)acrylic monomer, and α-methylstyrene.

For example, a first monomer composition including a petroleum resin-based monomer and α-methylstyrene may be prepared. A catalyst to be described below may be added to the first monomer composition and then a catalytic polymerization was performed to prepare a first polymer composition. Subsequently, a (meth)acrylic monomer may be added to the first polymer composition to prepare a second monomer composition. Subsequently, the second monomer composition may be subjected to a thermal polymerization and a degassing reaction to prepare an adhesion-imparting resin.

For example, the types and properties of the petroleum resin-based monomer, the (meth)acrylic monomer and the α-methylstyrene, and the properties of the adhesion-imparting resin may be referred to the above-described description.

According to an embodiment, the content of the petroleum resin-based monomer may be 5 to 40 wt%, the content of the (meth)acrylic monomer may be 5 to 80 wt%, and the content of α-methylstyrene may be 10 to 60 wt%, each based on the total weight of the monomer composition.

For example, the content of the petroleum resin-based monomer may be 10 to 40 wt%, 10 to 38 wt%, 10 to 30 wt%, or 15 to 30 wt%, based on the total weight of monomers in the monomer composition.

For example, the content of the (meth)acrylic monomer may be 5 to 80 wt%, 15 to 80 wt%, 20 to 80 wt%, or 30 to 70 wt%, based on the total weight of monomers in the monomer composition.

For example, the content of α-methylstyrene may be 15 to 60 wt%, 10 to 55 wt%, 10 to 50 wt%, 10 to 45 wt%, 10 to 40 wt%, or 15 to 40 wt%, based on the total weight of monomers included in the monomer composition.

For example, the monomer in the monomer composition may refer to the remaining components excluding a solvent included in the monomer composition.

According to an embodiment, the monomer composition may further include a solvent.

For example, the solvent may include xylene.

According to an embodiment, the preparation of the adhesion-imparting resin may include catalytically polymerizing the first monomer composition including the petroleum resin-based monomer and the α-methylstyrene to prepare a first polymerization composition, and adding a (meth)acrylic monomer to the first polymerization composition to prepare a second monomer composition and thermally polymerizing the second monomer composition to prepare a second polymerization composition. The second polymerization composition may be subjected to a degassing reaction to prepare an adhesion-imparting resin.

According to an embodiment, the catalytic polymerization may be performed in the presence of a catalyst, wherein the catalyst may include a Lewis acid, a halohydric acid, AlCl₃, BF₃, or any combination thereof. For example, the catalyst may include AlCl₃, BF₃, SnCl₄, TiCl₄, AgClO₄, I₂, or any combination thereof.

According to an embodiment, the catalytic polymerization may be performed at a temperature of 100 °C or less. For example, the catalytic polymerization may be performed at a temperature range of -50 to 100 °C, -30 to 100 °C, -10 to 100 °C, -50 to 80 °C, -30 to 80 °C, or -10 to 80 °C.

According to an embodiment, the thermal polymerization may be performed at a temperature range of 150 to 300 °C. For example, the thermal polymerization may be performed at a temperature of 200 to 300 °C, 220 to 300 °C, 230 to 300 °C, 200 to 280 °C, or 200 to 260 °C.

For example, the degassing reaction may be performed at a temperature of 150 °C to 300 °C and a pressure of 1 mbar to 50 mbar for 1 minute to 20 minutes.

According to another embodiment, the degassing reaction may be performed at a temperature of 220 °C to 280 °C and a pressure of 5 mbar to 25 mbar for 5 minutes to 15 minutes, or at a temperature of 240 °C to 260 °C and a pressure of 5 mbar to 15 mbar for 8 minutes to 12 minutes.

According to an embodiment, the above-described adhesion-imparting resin may be applied to an adhesive. According to another embodiment, the above-described adhesion-imparting resin may be applied to an acryl-based adhesive.

Another aspect of the present disclosure may provide an adhesive including the above-described adhesion-imparting resin. For example, the adhesion-imparting resin may impart adhesive strength to the adhesive.

According to an embodiment, the adhesive may be an acryl-based adhesive including the adhesion-imparting resin and an acryl-based polymer. For example, the adhesion-imparting resin has excellent compatibility with the acryl-based polymer, such that the acryl-based adhesive may have excellent transparency. For example, the adhesion-imparting resin due to including an epoxy group, has excellent reactivity with the acryl-based polymer, such that the acryl-based adhesive may have excellent heat resistance.

According to an embodiment, the acryl-based adhesive may be a photocurable acryl-based adhesive.

For example, the acryl-based adhesive may further include a crosslinking agent, a polymerization initiation catalyst, a curing accelerator, or the like in addition to the adhesion-imparting resin and the acryl-based polymer.

According to an embodiment, the content of the adhesion-imparting resin in the acryl-based adhesive may be 1 wt% or more based on the total weight of the acryl-based adhesive.

According to another embodiment, the content of the adhesion-imparting resin in the acryl-based adhesive may be 1 to 30 wt%, 5 to 30 wt%, 10 to 30 wt%, 1 to 25 wt%, 5 to 25 wt%, or 10 to 25 wt%, based on the total weight of the acryl-based adhesive.

According to an embodiment, the acryl-based adhesive may be transparent. In this case, the acryl-based adhesive may allow light to penetrate evenly therein, allowing a photocuring reaction to proceed evenly. Accordingly, the heat resistance and the like of the acryl-based adhesive may be further improved.

### [Definition of terms]

In the present specification, a C₁-C₂₀ alkyl group refers to a linear or branched aliphatic hydrocarbon monovalent group having 1 to 20 carbon atoms, and specific examples thereof include a methyl group, an ethyl group, an n-propyl group, an isopropyl group, an n-butyl group, a sec-butyl group, an isobutyl group, a tert-butyl group, an n-pentyl group, a tert-pentyl group, a neopentyl group, an isopentyl group, a sec-pentyl group, a 3-pentyl group, a sec-isopentyl group, a n-hexyl group, an isohexyl group, a sec-hexyl group, a tert-hexyl group, an n-heptyl group, an isoheptyl group, a sec-heptyl group, a tert-heptyl group, an n-octyl group, an isooctyl group, a sec-octyl group, a tert-octyl group, a n-nonyl group, an isononyl group, a sec-nonyl group, a tert-nonyl group, an n-decyl group, an isodecyl group, a sec-decyl group, a tert-decyl group, and the like. In this specification, a C₁-C₂₀ alkylene group refers to a divalent group having the same structure as the C₁-C₂₀ alkyl group.

In the present specification, a C₁-C₂₀ alkoxy group refers to a monovalent group having Formula of -OA₁₀₁ (wherein, A₁₀₁ is the C₁-C₂₀ alkyl group), and specific examples thereof include a methoxy group, an ethoxy group, an isopropyloxy group, and the like.

In the present specification, a C₆-C₂₀ aryl group refers to a monovalent group having a carbocyclic aromatic system having 6 to 20 carbon atoms, and includes a phenyl group, a naphthyl group, an anthracenyl group, a phenanthrenyl group, a pyrenyl group, and the like. When the C₆-C₂₀ aryl group includes two or more rings, the two or more rings may be connected to each other.

Hereinafter, the present disclosure will be described in more detail through examples. These examples are for illustrative purposes only to describe the present disclosure in more detail, and it will be apparent to those skilled in the art that these examples should not be construed as limiting the scope of the present disclosure.

### Example 1. Preparation of adhesion-imparting resin

In a 1,000 ml chemical reactor equipped with a stirrer, a reflux condenser, a thermometer, and a nitrogen injection device, styrene (SM) and α-methylstyrene (AMS) for adjusting molecular weight were injected according to mixing amounts (SM: 140 g, AMS: 210 g) described in Table 1 below, and xylene as a solvent was injected so that the weight ratio with respect to the weight sum of styrene and α-methylstyrene (AMS) was 1:1, to thereby prepare a first monomer composition. 0.1 wt% of a catalyst BF₃ was added to the first monomer composition and polymerization was performed at 30 °C for 120 minutes to prepare a first polymer composition.

Subsequently, methyl acrylate (MA) was injected into the first polymer composition according to the content (MA: 350 g) described in Table 1 below, and xylene as a solvent was additionally injected into the first polymer composition at a weight ratio of 1:1 relative to MA, to thereby prepare a second monomer composition. Subsequently, the second monomer composition was thermally polymerized at a temperature of 240 °C for 2 hours to prepare a second polymer composition.

Subsequently, the second polymer composition was subjected to a degassing reaction for 10 minutes under the conditions of a temperature of 250 °C and a pressure of 10 mbar to prepare an adhesion-imparting resin.

### Examples 2 to 11 and Comparative Examples 1 to 3

An adhesion-imparting resin was prepared in the same manner as in Example 1, except that the weight of the monomer, the weight of the unit for adjusting molecular weight, and the weight of the solvent were changed as shown in Table 1 below.

**[Table 1]**

| Classification | Monomer | | Unit for adjusting molecular weight | |
|---|---|---|---|---|
| | SM | MA | Type | Content |
| Example 1 | 140 g (20 wt%) | 350 g (50 wt%) | α-methylstyre ne | 210 g (30 wt%) |
| Example 2 | 168 g(24 wt%) | 280 g (40 wt%) | α-methylstyre ne | 252 g (36 wt%) |
| Example 3 | 196 g(28 wt%) | 210 (30 wt%) | α-methylstyre ne | 294 g (42 wt%) |
| Example 4 | 224 g(32 wt%) | 140 g (20 wt%) | α-methylstyre ne | 336 g (48 wt%) |
| Example 5 | 252 g(36 wt%) | 70 g (10 wt%) | α-methylstyre ne | 378 g (54 wt%) |
| Example 6 | 84 g(12 wt%) | 490 g (70 wt%) | α-methylstyre ne | 126 g (18 wt%) |
| Example 7 | 175 g(25 wt%) | 350 g (50 wt%) | α-methylstyre ne | 175 g (25 wt%) |
| Example 8 | 210 g(30 wt%) | 350 g (50 wt%) | α-methylstyre ne | 140 g (20 wt%) |
| Example 9 | 70 g(10 wt%) | 350 g (50 wt%) | α-methylstyre ne | 280 g (40 wt%) |
| Example 10 | 56 g (8 wt%) | 350 g (50 wt%) | α-methylstyre ne | 294 g (42 wt%) |
| Example 11 | 280 g(40 wt%) | 350 g (50 wt%) | α-methylstyre ne | 70 g (10 wt%) |
| Comparative Example 1 | 350 g (50 wt%) | 350 g (50 wt%) | - | - |
| Comparative Example 2 | 140 g(20 wt%) | 350 g (50 wt%) | Mercaptan | 210 g (30 wt%) |
| Comparative Example 3 | 350 g(50 wt%) | - | α-methylstyre ne | 350 g (50 wt%) |

### Evaluation Example 1. Molecular weight measurement

Using gel permeation chromatography (GPC, product of Hewlett Packard, model name HP-1100), the adhesion-imparting resins prepared in Examples 1 to 11 and Comparative Examples 1 to 3 were measured for weight average molecular weight (Mw), number average molecular weight (Mn), Z-average molecular weight (Mz), and polymer density index (PDI).

The measurement of the Mw, Mn, Mz, and PDI of the adhesion-imparting resin were performed at 30 °C with 100 µl of each of the adhesion-imparting resins prepared in Examples 1 to 11 and Comparative Examples 1 to 3 being dissolved in tetrahydrofuran to a concentration of 4,000 ppm, injected into GPC, and then flowed at a flow rate of 1.0 mL/min while using tetrahydrofuran as a mobile phase of GPC. For a column, three Plgels (1,000+500+100 Å) by Agilent Technologies, Inc. were connected in series. As a detector, an RI detector (product of Hewlett Packard, HP-1047A) was used, and the measurement was performed at 30 °C. The measurement results are shown in Table 2 below.

### Evaluation example 2. Measurements of mol% of MA and mol% of aromatics

For each of the adhesion-imparting resins prepared in Examples 1 to 11 and Comparative Examples 1 to 3, ¹H-NMR spectrum was measured from 0.0 to 9.0 ppm.

First, an integral value of the range of 8 to 6 ppm, which is an aromatic detection range, was normalized to 5, and then a peak value of the range of 4 to 3.3 ppm was integrated to calculate an -OCH₃ integral value. Subsequently, the mol% of MA was calculated from the -OCH₃ integral value for the peak integral value over the entire range of 0.0 to 9.0 ppm.

Additionally, the mol% of aromatics was calculated by subtracting the mol% of MA from 100 mol %.

### Evaluation example 3. Measurements of softening point, viscosity (cps, 160 °C), and viscosity (cps, 180 °C)

### Softening point measurement

For each of the adhesion-imparting resins prepared in Examples 1 to 11 and Comparative Examples 1 to 3, the softening point was measured by using a ring and ball softening method (ASTM E 28). Resin was melted and poured into a ring-shaped mold, placed in a beaker containing glycerin, a ball was placed on the ring containing the resin, and then the temperature was increased by 2.5 °C per minute. The temperature at which the resin melts and the ball falls (softening point) was measured, and the results are shown in Table 2 below.

### Viscosity measurement

A Brookfield viscometer was used. Spindle No. 27 was used, and 10.5 g of a sample of each of the adhesion-imparting resins prepared in Examples 1 to 11 and Comparative Examples 1 to 3 was injected into a chamber. After each sample was stabilized at 160 °C for 30 minutes, the viscosity value when an RPM value of the stirring shaft was adjusted to have a torque value of 50 % was recorded in Table 2 below.

In addition, after the each sample was stabilized at 180 °C for 30 minutes, the viscosity value when a RPM value of stirring shaft was adjusted to have a torque value of 50 % was recorded in Table 2 below.

**[Table 2]**

| Class ificati on | Weigh t avera ge molec ular weight (g/mol ) | Num ber aver age mole cular weig ht (g/m ol) | Z-avera ge molec ular weight (g/mol ) | Poly mer disp ersit y inde x (PDI ) | Soften ing point | Visc osity (cps , 160 °C) | Visc osity (cps, 180 °C) | - OCH₃ integr al value (4 to 3.3 ppm) | mol % of MA | mol% of aromati cs |
|---|---|---|---|---|---|---|---|---|---|---|
| Exam ple 1 | 995 | 730 | 1378 | 1.36 | 62.5 | 40 | 20 | 3.1 | 51.7 | 48.3 |
| Exam ple 2 | 981 | 734 | 1336 | 1.33 6 | 61.5 | 48.8 | 25 | 2.06 | 34.3 | 65.7 |
| Exam ple 3 | 977 | 728 | 2015 | 1.34 2 | 61.5 | 58.7 | 29 | 1.28 | 21.3 | 78.7 |
| Exam ple 4 | 935 | 719 | 1229 | 1.3 | 64.9 | 69 | 35 | 0.63 | 10.5 | 89.5 |
| Exam ple 5 | 934 | 718 | 1228 | 1.3 | 73.1 | 80 | 39 | 0.24 | 4.0 | 96.0 |
| Exam ple 6 | 1290 | 786 | 6870 | 1.64 | 60.5 | 30.2 | 15.1 | 6.89 | 75.8 | 24.2 |
| Exam ple 7 | 1252 | 770 | 3254 | 1.79 | 65.2 | 68 | 34 | 2.945 | 49.1 | 50.9 |
| Exam ple 8 | 1463 | 799 | 4879 | 1.83 | 67.8 | 63 | 27 | 2.81 | 46.8 | 53.2 |
| Exam ple 9 | 895 | 642 | 1190 | 1.39 | 55.2 | 32 | 15 | 3.18 | 53.0 | 47.0 |
| Exam ple 10 | 801 | 581 | 1180 | 1.38 | 48.2 | 29 | 12 | 3.12 | 52.0 | 48.0 |
| Exam ple 11 | 1526 | 801 | 3553 | 1.91 | 63.1 | 47 | 24 | 2.89 | 48.2 | 51.8 |
| Com parati ve Exam ple 1 | 1920 | 895 | 4935 | 2.15 | 57 | 60 | 33 | 2.75 | 45.8 | 54.2 |
| Com parati ve Exam ple 2 | Not prepared | | | | | | | | | |
| Com parati ve Exam ple 3 | 1980 | 755 | 5309 | 2.62 | 82 | 95 | 47 | - | - | 0 |

### Preparation of acryl-based adhesive

15 wt% of each of the adhesion-imparting resins of Examples 1 to 11 and Comparative Examples 1 to 3 was mixed with 85 wt% of an acryl-based polymer to prepare an acryl-based adhesive.

### Evaluation Example 4. Evaluations of transparency and adhesive strength (65 mJ and 100 mJ conditions)

### Evaluation of transparency

An aluminum container with a depth of 1 cm was prepared, allowing an observer to identify letters written on the inner bottom of the container when looking at the container from above. Specific letter (for example, the letter A, B, or C) was written on the inner bottom of the aluminum container so that the observer can identify them. Subsequently, each of the adhesion-imparting resins of Examples 1 to 11 and Comparative Examples 1 to 3 was filled fully into the aluminum container.

Subsequently, the aluminum container into which the each adhesion-imparting resin was injected was observed from top to bottom, and it was evaluated whether the letters written on the inner bottom of the aluminum container could be identified. Based on Comparative Example 1 (indicated as O), when the identification of the letter was easier, it was evaluated as ⊚, when the identification of the letter was not easier, it was evaluated as Δ, and when the identification of the letter was impossible, it was evaluated as X. The evaluation results are shown in Table 3 below.

### Evaluation of adhesive strength

Measurements were performed by using Universal Testing Machine(UTM). First, each of the acryl-based adhesives prepared from the adhesion-imparting resins of Examples 1 to 9 and Comparative Examples 1 to 3 was applied to a thickness of 50 micrometers on a PET film to prepare a tape.

After UV irradiation through an exposure device, the tape was attached to a SUS-304 steel plate. The part with the PET film attached was mounted on a UTM grip and measurement was performed at a speed of 30 mm/min. At this time, the value indicated on the UTM equipment represents an adhesive strength (N/in).

**[Table 3]**

| Classification | Transparency | 100 mJ, 50 GSM, SUS substrate adhesive strength | | |
|---|---|---|---|---|
| | | Peel strength after 20 minutes (N/25 mm) | Peel strength after 24 hours (N/25 mm) | SAFT (°C) |
| Example 1 | ⊚ | 22 | 19 | 200 |
| Example 2 | ⊚ | 23 | 21 | 200 |
| Example 3 | ⊚ | 20 | 19 | 200 |
| Example 4 | ⊚ | 23 | 26 | 172 |
| Example 5 | ⊚ | 22 | 25 | 164 |
| Example 6 | ⊚ | 20 | 22 | 200 |
| Example 7 | ⊚ | 22 | 21 | 200 |
| Example 8 | ⊚ | 21 | 21 | 190 |
| Example 9 | ⊚ | 22 | 20 | 185 |
| Example 10 | ⊚ | 21 | 21 | 117 |
| Example 11 | ⊚ | 22 | 22 | 92 |
| Comparativ e Example 1 | ○ | 22 | 23 | 73 |
| Comparativ e Example 2 | Unable to identify | | | |
| Comparativ e Example 3 | △ | 20 | 22 | 98 |

As shown in Table 3 above, when comparing the transparency and adhesive strength of the acryl-based adhesives including the adhesion-imparting resins according to Examples 1 to 11 and Comparative Examples 1 to 3, respectively,

the acryl-based adhesives including the adhesion-imparting resins according to Examples 1 to 11 had excellent compatibility with an acryl-based polymer, and thus had improved transparency and adhesive strength at the same time compared to the acryl-based adhesives including the adhesion-imparting resins according to Comparative Examples 1 to 3.

The Examples and Comparative Examples above have been described as examples to describe the present disclosure, and therefore, the present disclosure is not limited thereto. It will be apparent to those skilled in the art that various modifications may be made therein to enable the present disclosure, and therefore, the technical protection scope of the disclosure should be defined by the appended claims.

## Claims

1. An adhesion-imparting resin comprising:
a repeating unit (a) derived from a petroleum resin-based monomer;
a repeating unit (b) derived from a (meth)acrylic monomer; and
a repeating unit (c) derived from α-methylstyrene as a unit for adjusting molecular weight, and
having a weight average molecular weight of 2,000 g/mol or less.

2. The adhesion-imparting resin of claim 1,
wherein the petroleum resin-based monomer comprises a C9 fraction-based monomer.

3. The adhesion-imparting resin of claim 2,
wherein the C9 fraction-based monomer comprises a styrene-based monomer represented by Formula 1: 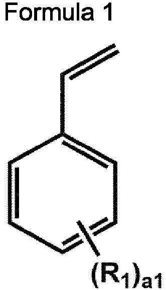 wherein, in Formula 1,
a1 is an integer from 0 to 5, and
R₁ is: hydrogen, deuterium, -F, -Cl, -Br, -I, a hydroxyl group, a cyano group, or a nitro group;
a C₁-C₂₀ alkyl group or a C₁-C₂₀ alkoxy group, each unsubstituted or substituted with deuterium, -F, -Cl, -Br, -I, a hydroxyl group, a cyano group, a C₆-C₂₀ aryl group, or any combination thereof; or
a C₆-C₂₀ aryl group that is unsubstituted or substituted with deuterium, -F, -Cl, -Br, -I, a hydroxyl group, a cyano group, a C₁-C₂₀ alkyl group, a C₁-C₂₀ alkoxy group, or any combination thereof.

4. The adhesion-imparting resin of claim 2,
wherein the C9 fraction-based monomer comprises a styrene monomer.

5. The adhesion-imparting resin of claim 1,
wherein the (meth)acrylic monomer is represented by Formula 2: 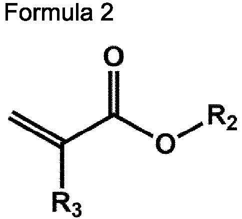 wherein, in Formula 2,
R₂ and R₃ are each independently: hydrogen, deuterium, -F, -Cl, -Br, -I, a hydroxyl group, a cyano group, or a nitro group;
a C₁-C₂₀ alkyl group or a C₁-C₂₀ alkoxy group, each unsubstituted or substituted with deuterium, -F, -Cl, -Br, -I, a hydroxyl group, a cyano group, a C₆-C₂₀ aryl group, or any combination thereof; or
a C₆-C₂₀ aryl group that is unsubstituted or substituted with deuterium, -F, -Cl, -Br, -I, a hydroxyl group, a cyano group, a C₁-C₂₀ alkyl group, a C₁-C₂₀ alkoxy group, or any combination thereof.

6. The adhesion-imparting resin of claim 1,
wherein the (meth)acrylic monomer comprises an acrylic acid, a methyl acrylate, an ethyl acrylate, a propyl acrylate, a butyl acrylate, a methyl metacrylate, an ethyl metacrylate, a propyl metacrylate, a butyl acrylate, a 2-ethylhexyl acrylate, or any combination thereof.

7. The adhesion-imparting resin of claim 1,
wherein a ratio of the content of the repeating unit (c) derived from α-methylstyrene to the content of the repeating unit (a) derived from a petroleum resin-based monomer is 0.1 to 10.

8. The adhesion-imparting resin of claim 1,
wherein in the adhesion-imparting resin, a ratio of an amount of the repeating unit (c) derived from α-methylstyrene to an amount of the repeating unit (a) derived from a petroleum resin-based monomer is 0.5 to 4.

9. The adhesion-imparting resin of claim 1,
wherein in the adhesion-imparting resin, an amount of the repeating unit (a) derived from a petroleum resin-based monomer is 5 to 40 wt% based on the total weight of the adhesion-imparting resin,
an amount of the repeating unit (b) derived from a (meth)acrylic monomer is 5 to 80 wt% based on the total weight of the adhesion-imparting resin, and
an amount of the repeating unit (c) derived from α-methylstyrene is 10 to 60 wt% based on the total weight of the adhesion-imparting resin.

10. The adhesion-imparting resin of claim 1,
wherein a weight average molecular weight (Mw) of the adhesion-imparting resin is 700 to 1,500 g/mol.

11. The adhesion-imparting resin of claim 1,
wherein a number average molecular weight (Mn) of the adhesion-imparting resin is 1,000 g/mol or less,
a Z-average molecular weight (Mz) of the adhesion-imparting resin is 7,000 g/mol or less, and
a polymer dispersity index (PDI) of the adhesion-imparting resin is 1 to 3.

12. The adhesion-imparting resin of claim 1,
wherein a softening point of the adhesion-imparting resin is 40 to 120 °C.

13. The adhesion-imparting resin of claim 1,
a viscosity (cps) at 160 °C of the adhesion-imparting resin is 20 to 200 cps, and
a viscosity (cps) at 180 °C of the adhesion-imparting resin is 1 to 100 cps.

14. The adhesion-imparting resin of claim 1,
wherein a mol% of the repeating unit (b) derived from a (meth)acrylic monomer, of the adhesion-imparting resin, as measured via NMR is 1 to 70 mol%, and
an aromaticity (%) of the adhesion-imparting resin as measured via NMR is 30 to 99%.
